# EUROPÄISCHE PATENTSCHRIFT

(11) **EP 3 392 296 B1**
(45) Veröffentlichungstag und Bekanntmachung des Hinweises auf die Patenterteilung: **08.09.2021**
(21) Anmeldenummer: 17000693.6
(22) Anmeldetag: 21.04.2017
(51) Int. Cl.: C08J 5/04, C08L 27/06, C08L 97/02

(54) **ZUSAMMENSETZUNG UND FORMTEIL, DAS DURCH FORMEN DER ZUSAMMENSETZUNG HERSTELLBAR IST**
COMPOSITION AND MOULDED ARTICLE THAT CAN BE CONSTRUCTED BY MOULDING THE COMPOSITION
COMPOSITION ET PIÈCE MOULÉE POUVANT ÊTRE FABRIQUÉE PAR FORMATION DE LA COMPOSITION

(43) Veröffentlichungstag der Anmeldung: 24.10.2018
(73) Patentinhaber: Patenta Asia Ltd., Hong Kong (CN)
(72) Erfinder: Duna, Bernd, 80469 München (DE); Siu, Antonio, 119823 Singapur (SG)
(74) Vertreter: Grünecker Patent- und Rechtsanwälte PartG mbB

(56) Entgegenhaltungen:
- WO-A1-2011/100995
- DE-A1-102012 006 878
- DE-U1-202013 007 233
- DE-U1-202013 007 235
- DE-U1-202013 007 267
- DE-U1-202015 003 154
- US-A1- 2011 045 250

## Beschreibung

Die Erfindung bezieht sich auf eine Zusammensetzung, umfassend ein PVC-Harz und Reisschalenpulver, wobei das Reisschalenpulver eine spezifische Partikelgrößenverteilung besitzt. Weiter bezieht sich die Erfindung auf ein Formteil, der durch Formen der Zusammensetzung über ein Formgebungsverfahren erhältlich ist.

### Stand der Technik

Im Stand der Technik sind Zusammensetzungen bekannt, die PVC-Harze und Reisschalenpulver umfassen, und die z.B. zur Herstellung von Holzimitaten verwendet werden können. Diese Zusammensetzungen wurden insbesondere als Ersatz für herkömmliche Holz-Plastik-Composite (d.h. wood-plastic-composite "WPC") bzw. für HPL-Materialien ("high pressure laminate") entwickelt. Bekannte PVC-Harz/Reisschalenpulver Zusammensetzungen verwenden Reisschalenpulver, die eine relativ große Partikelgröße von z.B. 0,42 bis 0,25 mm besitzen (siehe z.B. WO 2011/100995 A1). Weiter sind z.B. in der DE 20 2013 007 232 U1, DE 20 2013 007 233 U1, DE 20 2013 007 234 U1, DE 20 20013 007 235 U1 und DE 20 2015 003 154 U1 Zusammensetzungen beschrieben, die PVC-Harz und Reisschalenpulver aufweisen können, wobei das Reisschalenpulver eine Partikelgröße in einem breiten Bereich von 0,42 bis 0,10 mm besitzt. Auch in der WO 2016/192846 A1 wird eine Folie aus einem Werkstoff beschrieben, der PVC und z.B. Reisschalenpulver umfasst, wobei das Reisschalenpulver eine Partikelgröße von 10 bis 250 µm hat.

Aufgrund der steigenden Anforderungen an Holzersatzstoffe und der Wünsche nach neuen Werkstoffen besteht Bedarf an Zusammensetzungen, die in einer Vielzahl von Anwendungen Einsatz finden können und insbesondere auch eine vergleichsweise geringe Dichte aufweisen. Mit den im Stand der Technik beschriebenen Zusammensetzungen aus PVC und Reisschalenpulver lassen sich beispielsweise Werkstoffe einer Dichte von 1 g/cm³ nicht oder nur sehr aufwendig herstellen. Auch dünne Formteile sind häufig nur aufwendig herzustellen. Weiter ist v.a. bei der Verwendung von herkömmlichen Reisschalenpulver mit kleineren Partikelgrößen von 150 µm oder weniger dessen Verarbeitbarkeit beim Formgebungsprozess mangelhaft. Dies ist durch die relativ große Oberfläche pro Masseneinheit erklärbar, die höhere Adhäsionskräfte und somit eine geringere Fließbarkeit bedingt.

Die DE 10 2015 006 878 A1 und DE 20 2013 007 267 U1 offenbaren auch Zusammensetzungen, die Reisschalenpulver enthalten.

### Aufgabe der Erfindung

Aus diesen Gründen besteht weiter Bedarf an Zusammensetzungen, die die Herstellung insbesondere von geschäumten Formteilen mit geringer Dichte ermöglichen, ebenso wie die Herstellung dünner Formteile.

Somit liegt der Erfindung die Aufgabe zugrunde, Zusammensetzungen, geeignet insbesondere zur Herstellung geschäumter Platten oder Folien mit einer Schichtdicke von 3 mm oder weniger, anzugeben, sowie daraus hergestellte Formteile.

### Kurze Beschreibung der Erfindung

Diese Aufgabe wird durch die Zusammensetzung nach Anspruch 1 gelöst. Bevorzugte Ausführungsformen der Zusammensetzung sind in den Unteransprüchen 2 bis 10 beschrieben, die auch in Kombination untereinander umfasst sind. Weiter wird die Aufgabe durch das Formteil nach Anspruch 11 gelöst. Bevorzugte Ausführungsformen des Formteils sind in den Unteransprüchen 12 bis 14 beschrieben, die auch in Kombination untereinander umfasst sind. Weiter wird die Aufgabe durch die Verwendung nach Anspruch 15 gelöst. Zusätzliche Ausgestaltungen ergeben sich aus der nachfolgenden detaillierten Beschreibung. Diese beschreibt die vorliegende Erfindung besonders im Zusammenhang mit der erfindungsgemäßen Zusammensetzung. Die dort als bevorzugt beschriebenen Ausführungsformen gelten aber auch für das erfindungsgemäße Verfahren, die erfindungsgemäßen Formteile als auch für die beanspruchte Verwendung.

### Detaillierte Beschreibung der Erfindung

Die erfindungsgemäße Zusammensetzung umfasst 30 - 65 Gew.-% PVC-Harz und 10 - 35 Gew.-% Reisschalenpulver, bezogen auf die Gesamtmenge der Zusammensetzung.

In bevorzugten Ausführungsformen umfasst die Zusammensetzung 38 - 60 Gew.-%, bevorzugt 40 - 58 Gew.-%, stärker bevorzugt 49 - 55 Gew.-% PVC-Harz.

Für das PVC-Harz gibt es keine besonderen Einschränkungen. Insbesondere kann PVC-Neumaterial oder PVC-Recyclingmaterial, bzw. Mischungen davon verwendet werden. Beispielsweise eignet sich eine PVC-Harz-Suspension mit einem K-Wert von 50 - 70. Unter dem K-Wert versteht man eine Zahl, die aus Messungen der Viskosität verdünnter Lösungen eines Polymers berechnet wird und die ein Maß für den Polymerisationsgrad bzw. die Molekülgröße ist. Der K-Wert wird als Harz-Spezifikation verwendet. Der Begriff PVC-Harz bezieht sich auf Homopolymere von Vinylchlorid und auf Copolymere, die durch Polymerisation von Vinylchlorid mit einem oder mehreren Comonomeren, wie z.B. Ethylen, Propylen oder Vinylacetat gebildet werden.

In Ausführungsformen kann die Zusammensetzung 15 - 32 Gew.-%, bevorzugt 17 - 30 Gew.-%, mehr bevorzugt 20 - 25 Gew.-% Reisschalenpulver umfassen.

Die vorstehend für die beiden Komponenten PVC und Reisschalenpulver genannten Mengenbereiche können je nachgewünschtem Einsatzzweck oder Eigenschaftsprofil miteinander kombiniert werden, also beispielsweise 30 bis 65 Gew.-% PVC und 20 bis 25 Gew.-% Reisschalenpulver, etc.

In Ausführungsformen ist das Gewichtsverhältnis des PVC-Harzes und des Reisschalenpulvers in der Zusammensetzung 1:1 bis 3,5:1 bevorzugt 1,5:1 bis 3:1,5, mehr bevorzugt 2:1 bis 2,5:1. Durch dieses Gewichtsverhältnis lassen sich gute Mischbarkeiten der Einzelkomponenten (auchmit den nachfolgend beschriebenen zusätzlichen Komponenten), d.h. eine besonders gute Homogenität der resultierenden /Zusammensetzungen/Formteile, gewährleisten.

Das erfindungsgemäß einzusetzende Reisschalenpulver besitzt die folgende Partikelgrößenverteilung: 40 - 70 Gew.-% des Reisschalenpulvers besitzen eine Partikelgröße im Bereich von <150 µm (>100 mesh) und 30 - 60 Gew.-% des Reisschalenpulvers besitzen eine Partikelgröße im Bereich von 249 - 150 µm (100 mesh). Dabei bedeuten die vorstehend genannten Partikelgrößen, sowie die nachfolgend beschriebenen bevorzugten Partikelgrößen und Partikelgrößenverteilungen, dass die genannten Fraktionen durch Siebprozesse bestimmt sowie isoliert werden können. Die Fraktion mit der Partikelgröße 249 - 150 µm (100 mesh) bedeutet, dass die Partikel ein Sieb der Siebweite 100 mesh nicht passieren (s.u.).

Die Partikelgröße und Partikelgrößenverteilung wird durch ein Siebverfahren bestimmt, bei dem eine Siebvorrichtung der Firma Filtra, Model "Iris FTL-0200" verwendet wird (Geräteeinstellungen: Power: 5; Cycle: 0, Timer: 10 min.). Die Probemenge ist 100g, genommen mindestens ca. 20 cm von der Oberfläche des Gebindes entfernt. Die Messung wird 3 Mal wiederholt. Das Ergebnis entspricht dem arithmetischen Mittel der drei Messwerte. Die verwendeten Siebe sind wie folgt: 40 mesh (>425 µm), 45 mesh (355 - 425 µm), 60 mesh (250 - 354 µm), 100 mesh (150 - 249 µm), der verbleibende Rest wird als Partikelgröße >100 mesh (<150µm) definiert. Die Bezeichnung "mesh" bezeichnet die Maschenweite der Siebe gemäß "US Standard Sieve". Je kleiner der mesh-Wert, desto größer ist die Partikelgröße.

In einer bevorzugten Ausgestaltung ist die Zusammensetzung des Reisschalenpulvers so, dass 40 - 60 Gew.-% des Reisschalenpulvers eine Partikelgröße im Bereich von <150 µm (>100 mesh) und 40 - 60 Gew.-% des Reisschalenpulvers eine Partikelgröße im Bereich von 249 - 150 µm (100 mesh) besitzen. Es ist ebenfalls bevorzugt, dass 20 Gew.-% oder weniger, insbesondere 10 Gew.-% oder weniger, des Reisschalenpulvers eine Partikelgröße im Bereich von 250 µm oder größer (<100mesh) besitzen.

In Ausführungeformen ist die Zusammensetzung des Reisschalenpulvers so gewählt, dass 40 - 50 Gew.-% des Reisschalenpulvers eine Partikelgröße im Bereich von <150 µm (> 100 mesh), 40- 50 Gew.-% des Reisschalenpulvers eine Partikelgröße im Bereich von 249 - 150 µm (100 mesh), weniger als 15 Gew.-% des Reisschalenpulvers eine Partikelgröße im Bereich von 354 - 250 µm (60 mesh), weniger als 3 Gew.-% des Reisschalenpulvers eine Partikelgröße im Bereich von 424 - 355 µm (45 mesh), und weniger als 1 Gew.-% des Reisschalenpulvers eine Partikelgröße im Bereich von größer als 425 µm (40 mesh) besitzen.

Durch ein Reisschalenpulver mir einer solchen spezifischen Partikelgrößenverteilung ist es überraschenderweise möglich, trotz einer relativ kleinen Partikelgröße eine gute Verarbeitbarkeit bei einem Formgebungsprozess zu gewährleisten. Gleichzeitig ist eine hohe Homogenität des Werkstoffs realisierbar. Dadurch sind gute ästhetische Oberflächeneigenschaften, wie das optische und haptische Erscheinungsbild, und mechanische Eigenschaften erzielbar, insbesondere auch bei der Herstellung von Platten oder Folien mit einer geringen Schichtdicke von 3 mm oder weniger, oder bei der Herstellung von geschäumten Formteilen. Die verbesserten ästhetische Oberflächeneigenschaften sind z.B. eine holzähnliche Optik und Haptik. Die verbesserte Homogenität wird durch eine verringerte Segregationsneigung erzielt und äußert sich z.B. in verbesserten mechanischen Eigenschaften, wie z.B. hervorragenden Werten für die Parameter Zugfestigkeit, Zug-E-Modul, Biegefestigkeit, Biege-E-Modul, einem verbesserten Schraubenabzugswert und einer verbesserten IZOD Schlagzähigkeit (gekerbt). Weiter wird eine hervorragende thermische Längenausdehnung, ein hoher Wasserdampfdiffusionswiderstand und eine geringe Wasseraufnahme realisiert. Insbesondere ist hier hervorzuheben, dass die Formteile gemäß dem oben beschriebenen Stand der Technik Reisschalenpulver umfassen, das nicht die spezifische Partikelgrößenverteilung gemäß der erfindungsgemäßen Zusammensetzung besitzt, und so insbesondere bei geschäumten Formteilen oder Folien bzw. plattenartigen Formteilen mit einer geringen Schichtdicke schlechtere Eigenschaften resultieren.

Die verwendeten Reisschalen unterliegen keinen besonderen Einschränkungen, insbesondere nicht in Bezug auf bestimmte Reissorten. In einer bevorzugten Ausführungsform wird das Reisschalenmaterial über ein herkömmliches Mahlverfahren pulverisiert, gefolgt, soweit notwendig von Siebverfahren zur Gewinnung einzelnen Fraktionen an Partikelgrößen, so dass anschließend, beispielsweise durch Zusammenmischung einzelner Fraktionen die oben genannte erforderliche Partikelgrößenverteilung erzielt wird (wenn der Mahlvorgang selbst schon die gewünschte Verteilung ergibt, können die Siebschritte entfallen. Die Partikel des Reisschalenpulvers können sphärisch oder asphärisch sein. Das Reisschalenpulver kann vor dem Einsatz in der erfindungsgemäßen Zusammensetzung oberflächenbehandelt werden, um eine gute Mischbarkeit mit dem PVC-Harz zu gewährleisten. Insbesondere ist bevorzugt, dass das Reisschalenpulver mit Silan- oder Siloxangruppen oberflächenfunktionalisiert ist. Somit wird eine besonders gute Haftung zum PVC-Harz gewährleistet.

In Ausführungsformen umfasst die Zusammensetzung einen oder mehrere anorganische Füllstoffe. Die anorganischen Füllstoffe sind bevorzugt ausgewählt aus der Gruppe, umfassend Kalziumcarbonat, Talk, Glimmer, Tonerde, Kaolin, Silikat oder Titanoxid, oder Mischungen davon. Insbesondere ist Kalziumcarbonat bevorzugt. Bevorzugt sind die anorganischen Füllstoffe in der Zusammensetzung in 0 - 30 Gew.-%, weiter bevorzugt in 5 - 25 Gew.-%, mehr bevorzugt in 10 - 20 Gew.-%, bezogen auf die Gesamtmenge der Zusammensetzung, enthalten.

Die Zusammensetzung enthält in Ausführungsformen ein oder mehrere Additive, ggf. zusätzlich zu den anorganischen Füllstoffen. Diese Additive sind bevorzugt ausgewählt aus der Gruppe, umfassend polymere Binder, bevorzugt auf Thermoplastkunststoffbasis, Farbstoffe und/oder Pigmente, Gleit/Schmiermittel, PVC-Verarbeitungsmittel, wie Weichmacher, Schaumbildner, UV-Stabilisatoren, thermische Stabilisatoren, Brandschutzmittel, oder Mischungen davon. Die Additive sind bevorzugt in 0 - 30 Gew.-%, weiter bevorzugt in 5 - 25 Gew.-%, mehr bevorzugt in 10 - 20 Gew.-%, bezogen auf die Gesamtmenge der Zusammensetzung, enthalten.

Der polymere Binder besitzt beispielsweise die Funktion, Feuchtigkeit oder Lösungsmittel zu binden. Bevorzugt werden Polymere aus Acrylaten und/oder Methacrylaten verwendet. Farbpigmente sind z.B. Kreide, Titandioxid, Rußschwarz, rotes Eisenoxid oder Ocker. Schmier/Gleitmittel sind z.B. Fettsäuresalze wie Calciumstearat, Fettsäureester, Fettsäureamide, Paraffinwachse, Polyethylenwachse oder mikrokristallines Parafin. PVC-Verarbeitungsmittel (wie z.B. Wärme- und Witterungsstabilisatoren, Antioxidantien, Alterungsschutzmittel, Lichtstabilisatoren, Ultraviolettabsorber, Antistatikmittel) sind dem Fachmann bekannt und im Handel in großer Auswahl verfügbar. Insbesondere werden z.B. Polyethylen oder chloriertes Polyethylen als PVC Weichmacher verwendet. Als Schaumbildner (bzw. Aufschäumer) können herkömmliche Schaumbildner eingesetzt werden, die keinen besonderen Beschränkungen unterliegen. Insbesondere sind chemische oder physikalische Schaumbildner einsetzbar. Physikalische Schaumbildner sind z.B. Tenside oder andere grenzflächenaktive Stoffe, die neben der Grenzflächenaktivität auch ein gewisses Filmbildungsvermögen besitzen, und so die Bildung von Schaumflüssigkeiten durch Einblasen von Gas fördern. Bei chemischen Schaumbildnern beruht die Schaumbildung auf einer chemischen Reaktion, die unter Gasentwicklung abläuft. Beispiele sind Polyurethan-basierte Schaumbildner oder Azo-basierte Schaumbildner. Die zuzusetzende Menge ergibt sich aus den Herstellerinstruktionen und wird vom Fachmann durch einfache Routineversuche bestimmt. Durch die Menge des Schaumbildners kann die resultierende Dichte des geschäumten Werkstoffs eingestellt werden.

Der chemische Binder auf Thermoplastkunststoffbasis hat beispielsweise die Funktion, Feuchtigkeit oder Lösungsmittel von Naturstofffasern zu entfernen und verbindet bzw. vernetzt sich stark mit dem "nonwoven web" bzw. Netzwerk aus Naturstofffasern. PVC-Verarbeitungshilfsmittel ("PVC processing aids") können die Verschmelzung ("Fusion") beschleunigen, die Schmelzstärke bw. Zähigkeit der Schmelze ("melt strength") verbessern, Oberflächendefekte eliminieren und das "place out" verringern. Außerdem können sie im Produktionsprozess die Metallablösungseigenschaften verstärken. Geeignete Binder und Verarbeitungshilfsmittel sind dem Fachmann auf dem Gebiet der PVC-Verarbeitung geläufig und im Handel in großer Auswahl verfügbar.

Für brandhemmende Zusammensetzungen werden in bevorzugten Ausführungsformen z.B. 10 - 20 Gew.-% Al₂O₃, 5 - 10 Gew.-% Sb₂O₃ und 0,1 - 5% Zinkborat als Additive zugesetzt.

Für geschäumte Platten oder Profile werden in bevorzugten Ausführungsformen z.B. 0,1 - 5 Gew.-% Schaumbildner, 5 - 10 Gew.-% Gleitmittel und 5 - 15% Acrylate als Additive zugesetzt. Bevorzugte Ausführungsformen für Platten, Profile, die Impact-modifiziert sind, und die über Co-Extrusion oder Spritzguss hergestellt werden, können weiter 1 -10 Gew.-% Gleitmittel und 5 - 15 Gew.-% Acrylate beinhalten.

In einer Ausführungsform umfasst die Zusammensetzung ausschließlich das PVC-Harz als polymere Komponente, d.h. es sind außer dem PVC-Harz keine weiteren polymeren Komponenten wie z.B. polymere Binder vorhanden. Die bedingt u.a. eine hohe mechanische Festigkeit des resultierenden Formteils.

Bevorzugt umfasst die Zusammensetzung 35 - 50 Gew.-% PVC-Harz und 15 - 35 Gew.-% Reisschalenpulver, sowie 10 - 25 Gew.-% anorganischen Füllstoff und 10 - 25 Gew.-% Additive, bezogen auf die Gesamtmenge der Zusammensetzung.

Die vorliegende Erfindung umfasst weiter ein Formteil, der aus der oben beschriebenen Zusammensetzung über ein Formgebungsverfahren hergestellt werden kann. Das Formgebungserfahren unterliegt keinen besonderen Beschränkungen und umfasst bevorzugt Schäumen, (Co)-Extrudieren, Kalandrieren, Spritzgießen oder 3D-Drucken.

Dem Fachmann ist die Einstellung geeigneter Verfahrensbedingungen geläufig. Weiter können beliebige handelsübliche Maschinen für das Formgebungsverfahren eingesetzt werden. Die Bedienung erfolgt nach den Herstellinstruktionen. Dem Fachmann ist klar, dass die erfindungsgemäße Zusammensetzung unter den Verarbeitungsbedingungen (z.B. Temperatur und Druck) ausreichend homogenisiert und verflüssigt werden muss, so dass sie mit den entsprechenden Maschinen verarbeitbar ist. Geeignete Verarbeitungsbedingungen sind entweder die vom Hersteller spezifizierten oder werden vom Fachmann durch einfache Routineversuche ermittelt.

In einer bevorzugten Ausführungsform hat das Formteil die Form einer Platte bzw. die Form einer Folie, oder die Form eines Profils. Dabei weist die Platte bzw. die Folie, oder das Profil bevorzugt eine Dicke von 3 mm oder weniger, bevorzugt 2 mm oder weniger, bevorzugt 1 mm oder weniger auf. Durch die spezifische Zusammensetzung gemäß der vorliegenden Erfindung und insbesondere durch die spezifische Partikelgrößenverteilung des Reisschalenpulvers sind Formteile mit solch geringen Schichtdicken realisierbar.

Entsprechende Platten/Folien oder Profile werden üblicherweise durch Kalandrieren oder (Co)-Extrusion hergestellt. Ein geeignetes Kalandrierungsverfahren für Folien mit einer Dicke von 180 bis 1000 µm ist z.B. in der WO 2016/192846 A1 beschrieben.

Weiter ist das Formteil bevorzugt geschäumt und besitzt eine Dichte von weniger als 1 g/cm³, in Ausführungsformen beträgt die Dichte 0,7 g/cm³ oder weniger, bevorzugt 0,5 g/cm³ oder weniger, wie etwa 0,4 g/cm³ oder 0,3 g/cm³ (gemäß ISO 1183).

Vor dem Durchführen der Formgebungsverfahren wird beispielsweise das PVC-Pulver in einem Mischer mit Reisschalenpulver und optional Füllstoff/Additiv (ggf. bei höheren Temperaturen von z.B. 125 - 140°C) vermischt. Nach Abkühlen wir das Gemisch bei einer Temperatur im Bereich von beispielsweise 150 - 210°C oder 160 - 175°C geformt. Dabei kann ggf. während oder nach der Formgebung durch Zugabe eines Schaumbildners ein geschäumtes Produkt hergestellt werden.

In einer Ausführungsform erfolgt nach dem Formen der Zusammensetzung eine Oberflächenbehandlung, bevorzugt durch Abbürsten, Abschleifen, Aufrauen, Sandstrahlen, Lackieren, Ölen Lasieren, Bedrucken oder Mischungen davon.

Dabei wird durch das Abbürsten, Abschleifen, Aufrauen oder Sandstrahlen insbesondere die auf der Oberfläche des Formteils gebildete Kunststoffhaut entfernt, wodurch gute ästhetische Oberflächeneigenschaften, wie z.B. eine holzähnliche Haptik und Optik entsteht. Durch die Entfernung der Kunststoffhaut haben die erfindungsgemäßen Formteile auch eine gute Griff- bzw. Rutschfestigkeit.

Beispielsweise kann die Kunststoffhaut durch Abschleifen entfernt werden. Das Abschleifen kann z.B. mit einem Schleifmaterial wie Sand- oder Schleifpapier mit einer Körnung im Bereich von 24 bis 60 durchgeführt werden, beispielsweise unter Verwendung eines elektrisch betriebenen Handschleifers. Bei der Körnung entspricht ein kleinerer Zahlenwert einer gröberen Körnung und ein höherer Zahlenwert einer feineren Körnung. Eine Körnung von 24 ist eher grob und eignet sich z.B. zum Entfernen von Leim- oder Lackschichten, während eine Körnung von 60 eher mittel ist und beispielsweise zum groben Vorschleifen roher Holzflächen verwendet wird. Die geeignete Körnung wählt der Fachmann nach Maßgabe der praktischen Gegebenheiten bzw. des zu erzielenden Effekts.

Die erfindungsgemäßen Formteile können auf ihrer Oberfläche, ggf. nach einer entsprechenden Vorbehandlung (z.B. Grundierung), bedruckt, lackiert, lasiert oder geölt werden, insbesondere aufgrund der polaren Eigenschaften des verwendeten PVC- Harzes. Die polaren Eigenschaften erlauben auch eine leichte Verklebbarkeit und verleihen antistatische Eigenschaften. Im Gegensatz dazu sind konventionelle Holz/PE-Composite (WPCs) sind wegen der nichtpolaren Eigenschaften von PE nicht oder nur sehr schwer lackierbar, nicht verklebbar und nicht antistatisch.

Durch ihre Stabilität, Formbeständigkeit und absolute Widerstandsfähigkeit gegenüber Feuchtigkeitseinflüssen wie Regen sind die erfindungsgemäßen Formteile den konventionellen Holz/PE-Compositen (WPCs) und auch vielen Holzarten überlegen. Die erfindungsgemäßen Formteile sind nahezu wasserdicht. Das verwendete PVC ist nicht hygroskopisch und nimmt kein Wasser auf und verhindert so das Eindringen von Wasser durch eine Verletzung der Oberfläche, so dass keine Unterwanderung von aufgetragenen Lackschichten erfolgt und keine Lackabplatzungen auftreten. Der erfindungsgemäßen Formteile sind daher auch dimensionsstabil, so dass eine Verformung auf natürlichem Wege (z.B. durch Aufquellen oder Schwinden) nicht möglich ist. Konventionelle Holz/PE-Composite quellen dagegen unter Feuchtigkeitseinfluss. Lacke haften nicht mehr, weil das eindringende Wasser diese unterwandert und dadurch ablöst.

Der Farbton der erfindungsgemäßen Formteile kann durch Ölen, Bedrucken, Lackieren oder Lasieren eingestellt werden. Je nach Pigmentierung und Oberflächentönung lassen sich verschiedene Holzoptiken und -haptiken realisieren, z.B. von Tropenholz wie Burma Teak, Siam Teak, Java Teak oder Aged Teak.

Das Formteil der vorliegenden Erfindung kann bevorzugt als Holzimitat, geschäumtes Substrat für Laminate, Baumaterial, Fußbodenmaterial, Wandmaterial, Deckenmaterial für Schwellen, Furniere, Fensterflügel, Zäune, Möbel, Fahrzeug, oder Gehäuse für elektrische Geräte verwendet werden.

Insbesondere kann ein geschäumtes Formteil gemäß der vorliegenden Erfindung, mit oder ohne der oben beschriebenen Oberflächenbehandlung, als ein Ersatz für herkömmliche HPL-Formteile ("high pressure laminate"-Formteile) dienen.

Die Formteile haben insbesondere eine Zugfestigkeit im Bereich von 5,0 N/mm² oder mehr, bevorzugt 8,0 N/mm² oder mehr (gemessen mit ISO 527). Das Zug-E-Modul ist bevorzugt im Bereich von 500 N/mm² oder mehr, mehr bevorzugt von 700 N/mm² oder mehr (gemessen mit EN 789). Die Formteile weisen weiter bevorzugt eine Biegefestigkeit von 10 N/mm² oder mehr, bevorzugt 15 N/mm² oder mehr, auf. Das Biege-E-Modul ist bevorzugt 500 N/mm² oder mehr, mehr bevorzugt 600 N/mm² oder mehr (gemessen EN 310). Der Schraubenabzugswert ist bevorzugt 4.000 N oder mehr, mehr bevorzugt 5.000 N oder mehr (gemessen mit EN 320:2.011-07). Die IZOD Schlagzähigkeit (gekerbt) ist bevorzugt 2,0 kJ/m² oder mehr, mehr bevorzugt 2,5 kJ/m² oder mehr (gemessen mit ISO 180/1eA). Der thermische Längenausdehnungskoeffizient ist bevorzugt im Bereich von 10 x 10⁻⁵ k⁻¹ (gemessen mit ISO 11359-2/DIN 53852). Weiter hat das Formteil einen hohen Wasserdampfdiffusionswiderstand, gemessen mit DIN EN ISO 125752, sowie eine geringe Wasserdampfaufnahme von höchstens kleiner 1% (24 Stunden), gemessen in Anlehnung an IN 317. Weiter besitzt das Formteil einen hohen Widerstand gegen holzzerstörende Pilze, einen hohen Verrottungswiderstand, sowie einen hohen Widerstand gegen unterirdische Termiten, und ist deswegen geeignet für Outdoor-Anwendungen.

## Patentansprüche

1. Zusammensetzung, umfassend 30 - 65 Gew.-% PVC-Harz und 10 - 35 Gew.-% Reisschalenpulver, bezogen auf die Gesamtmenge der Zusammensetzung, **dadurch gekennzeichnet, dass** 40 - 70 Gew.-% des Reisschalenpulvers eine Partikelgröße im Bereich von <150 µm (>100 mesh) und 30 - 60 Gew.-% des Reisschalenpulvers eine Partikelgröße im Bereich von 249 - 150 µm (100 mesh) besitzen, wobei die Partikelgröße durch ein Siebverfahren gemäß der Beschreibung bestimmt wird.

2. Zusammensetzung nach Anspruch 1, wobei 20 Gew.-% oder weniger, insbesondere 10 Gew.-% oder weniger, des Reisschalenpulvers eine Partikelgröße im Bereich von 250 µm oder größer (<100mesh) besitzen; und bevorzugt 40 - 50 Gew.-% des Reisschalenpulvers eine Partikelgröße im Bereich von <150 µm (>100 mesh), 40 - 50 Gew.-% des Reisschalenpulvers eine Partikelgröße im Bereich von 249 - 150 µm (100 mesh), weniger als 15 Gew.-% des Reisschalenpulvers eine Partikelgröße im Bereich von 354 - 250 µm (60 mesh), weniger als 3 Gew.-% des Reisschalenpulvers eine Partikelgröße im Bereich von 425 - 355 µm (45 mesh), und weniger als 1 Gew.-% des Reisschalenpulvers eine Partikelgröße im Bereich von größer als 425 µm (40 mesh) besitzen.

3. Zusammensetzung nach den Ansprüchen 1 oder 2, wobei die Zusammensetzung 35 - 60 Gew.-%, bevorzugt 40 - 58 Gew.-%, mehr bevorzugt 49 - 55 Gew.-%, PVC-Harz umfasst.

4. Zusammensetzung nach einem der vorherigen Ansprüche, wobei die Zusammensetzung 15 - 32 Gew.-%, bevorzugt 17 - 30 Gew.-%, mehr bevorzugt 20 - 25 Gew.-%, Reisschalenpulver umfasst.

5. Zusammensetzung nach einem der vorherigen Ansprüche, wobei das Reisschalenpulver mit Silan- oder Siloxangruppen oberflächenfunktionalisiert ist.

6. Zusammensetzung nach einem der vorherigen Ansprüche, wobei das Gewichtsverhältnis des PVC-Harzes und des Reisschalenpulvers in der Zusammensetzung 1:1 bis 3,5:1, bevorzugt 1,5:1 bis 3:1, mehr bevorzugt 2:1 bis 2,5:1, ist.

7. Zusammensetzung nach einem der vorherigen Ansprüche, weiter umfassend einen oder mehrere anorganische Füllstoffe, bevorzugt ausgewählt aus der Gruppe umfassend Kalziumcarbonat, Talk, Glimmer, Tonerde, Kaolin, Silikate oder Titanoxid, oder Mischungen davon, bevorzugt in 0 - 30 Gew.-%, weiter bevorzugt in 5 - 25 Gew.-%, mehr bevorzugt in 10 - 20 Gew.-%, bezogen auf die Gesamtmenge der Zusammensetzung.

8. Zusammensetzung nach einem der vorherigen Ansprüche, weiter umfassend ein oder mehrere Additive, bevorzugt ausgewählt aus der Gruppe umfassend polymere Binder, bevorzugt auf Thermoplastkunststoffbasis, Farbstoffe und/oder Pigmente, Gleit/Schmiermittel, PVC-Verarbeitungshilfsmittel, wie Weichmacher, UV-Stabilisatoren, thermische Stabilisatoren, Brandschutzmittel, oder Mischungen davon, bevorzugt in 0 - 30 Gew.-%, weiter bevorzugt in 5 - 25 Gew.-%, mehr bevorzugt in 10 - 20 Gew.-%, bezogen auf die Gesamtmenge der Zusammensetzung.

9. Zusammensetzung nach einem der vorherigen Ansprüche, umfassend 35 - 50 Gew.-% PVC-Harz und 15 - 30 Gew.-% Reisschalenpulver, sowie 10 - 25 Gew.-% anorganischen Füllstoff und 10 - 25 Gew.-% Additive, bezogen auf die Gesamtmenge der Zusammensetzung.

10. Zusammensetzung nach einem der vorherigen Ansprüche, wobei die Zusammensetzung ausschließlich das PVC-Harz als polymere Komponente umfasst.

11. Formteil, herstellbar durch Formen einer Zusammensetzung nach einem der vorstehenden Ansprüche über ein Formgebungsverfahren, bevorzugt umfassend Schäumen, (Co)-Extrudieren, Kalandrieren, Spritzgießen oder 3D-Drucken.

12. Formteil nach Anspruch 11, wobei das Formteil die Form einer Platte bzw. Folie oder eines Profils umfasst, wobei die Platte bzw. die Folie oder das Profil bevorzugt eine Dicke von 3 mm oder weniger, bevorzugt 2 mm oder weniger, bevorzugt 1 mm oder weniger, besitzt.

13. Formteil nach Anspruch 11 oder 12, wobei das Formteil geschäumt ist und eine Dichte von weniger als 1 g/cm³, bevorzugt 0,7 g/cm³ oder weniger, bevorzugt 0,5 g/cm³ oder weniger, besitzt.

14. Formteil nach Anspruch 11 bis 13, wobei nach dem Formen eine Oberflächenbehandlung erfolgt, bevorzugt Abbürsten, Abschleifen, Aufrauen, Sandstrahlen, Lackieren, Ölen, Lasieren, Bedrucken, oder Mischungen davon.

15. Verwendung eines Formteils nach einem der Ansprüche 11 bis 14 als Holzimitat, geschäumtes Substrat für Laminate, Plattenwerkstoff, Baumaterial, Fußbodenmaterial, Wandmaterial, Deckenmaterial, für Schwellen, Furniere, Fensterflügel, Türen, Schindeln, Verkleidungen, Fassaden, Zäune, Möbel, Fahrzeuge, oder Gehäuse für elektrische Geräte.

## Claims

1. Composition, comprising 30-65 wt.% PVC resin and 10-35 wt.% rice husk powder based on the total amount of the composition, **characterized in that** 40-70 wt.% of the rice husk powder have a particle size in the range of <150 µm (>100 mesh) and 30-60 wt.% of the rice husk powder have a particle size in the range of 249-150 µm (100 mesh), wherein the particle size is determined by a sieving method in accordance with the description.

2. The composition according to claim 1, wherein 20 wt.% or less, in particular 10 wt.% or less, of the rice husk powder have a particle size in the range of 250 µm or greater (<100 mesh); and preferably 40-50 wt.% of the rice husk powder have a particle size in the range of <150 µm (>100 mesh), 40-50 wt.% of the rice husk powder have a particle size in the range of 249-150 µm (100 mesh), less than 15 wt.% of the rice husk powder have a particle size in the range of 354-250 µm (60 mesh), less than 3 wt.% of the rice husk powder have a particle size in the range of 425-355 µm (45 mesh), and less than 1 wt.% of the rice husk powder have a particle size in the range of greater than 425 µm (40 mesh).

3. The composition according to claims 1 or 2, wherein the composition comprises 35-60 wt.%, preferably 40-58 wt.%, more preferably 49-55 wt.%, PVC resin.

4. The composition according to any of the preceding claims, wherein the composition comprises 15-32 wt.%, preferably 17-30 wt.%, more preferably 20-25 wt.%, rice husk powder.

5. The composition according to any of the preceding claims, wherein the rice husk powder is surface functionalized with silane or siloxane groups.

6. The composition according to any of the preceding claims, wherein the weight ratio of the PVC resin and rice husk powder in the composition is 1:1 to 3.5:1, preferably 1.5:1 to 3:1, more preferably 2:1 to 2.5:1.

7. The composition according to any of the preceding claims, further comprising one or more inorganic fillers, preferably selected from the group comprising calcium carbonate, talc, mica, alumina, kaolin, silicates or titanium oxide, or mixtures thereof, preferably in 0-30 wt.%, further preferably in 5-25 wt.%, more preferably in 10-20 wt.%, based on the total amount of the composition.

8. The composition according to any of the preceding claims, further comprising one or more additives, preferably selected from the group comprising polymeric binders, preferably on the basis of thermoplastic materials, dyes and/or pigments, lubricants, PVC processing aids, such as plasticizers, UV stabilizers, thermal stabilizers, fire retardants, or mixtures thereof, preferably in 0-30 wt.%, further preferably in 5-25 wt.%, more preferably in 10-20 wt.%, based on the total amount of the composition.

9. The composition according to any of the preceding claims, comprising 35-50 wt.% PVC resin and 15-30 wt.% rice husk powder, as well as 10-25 wt.% inorganic filler and 10-25 wt.% additives, based on the total amount of the composition.

10. The composition according to any of the preceding claims, wherein the composition exclusively comprises the PVC resin as polymeric component.

11. Molded part, obtainable by molding a composition according to any of the preceding claims by a molding process, preferably comprising foaming, (co)extruding, calendering, injection molding or 3D-printing.

12. The molded part according to claim 11, wherein the molded part comprises the shape of a plate or profile, wherein the plate or profile preferably has a thickness of 3 mm or less, preferably 2 mm or less, preferably 1 mm or less.

13. The molded part according to claim 11 or 12, wherein the molded part is foamed and has a density of less than 1 g/cm³, preferably 0.7 g/cm³ or less, preferably 0.5 g/cm³ or less.

14. The molded part according to claim 11 to 13, wherein, after the molding, a surface treatment is carried out, preferably brushing, grinding, roughening, sandblasting, varnishing, oiling, glazing, printing, or mixtures thereof.

15. Use of a molded part according to any of claims 11 to 14 as a wood imitation, foamed substrate for laminates, plate material, building material, floor material, wall material, ceiling material, for sills, veneers, window sashes, doors, shingles, claddings, facades, fences, furniture, vehicles, or housings for electrical appliances.

## Revendications

1. Composition comprenant entre 30 et 65 % en poids de résine PVC et entre 10 et 35 % en poids de poudre de balle de riz, par rapport à la quantité totale de la composition, **caractérisée en ce que** entre 40 et 70 % en poids de la poudre de balle de riz présentent une granulométrie inférieure à 150 µm (> 100 mesh) et entre 30 et 60 % en poids de la poudre de balle de riz présentent une granulométrie comprise entre 249 et 150 µm (100 mesh), dans laquelle la granulométrie est déterminée grâce à un procédé de tamisage conformément à la description de la présente invention.

2. Composition selon la revendication 1, dans laquelle 20 % en poids ou moins, en particulier 10 % en poids ou moins, de la poudre de balle de riz présentent une granulométrie supérieure à 250 µm (< 100 mesh) ; et de manière préférée entre 40 et 50 % en poids de la poudre de balle de riz présentent une granulométrie inférieure à 150 µm (> 100 mesh), entre 40 et 50 % en poids de la poudre de balle de riz présentent une granulométrie comprise entre 249 et 150 µm (100 mesh), moins de 15 % en poids de la poudre de balle de riz présentent une granulométrie comprise entre 354 et 250 µm (60 mesh), moins de 3 % en poids de la poudre de balle de riz présentent une granulométrie comprise entre 425 et 355 µm (45 mesh), et moins de 1 % en poids de la poudre de balle de riz présente une granulométrie supérieure à 425 µm (40 mesh).

3. Composition selon la revendication 1 ou 2, dans laquelle la composition comprend entre 35 et 60 % en poids, de manière préférée entre 40 et 58 % en poids, de manière plus préférée entre 49 et 55 % en poids, de résine PVC.

4. Composition selon l'une quelconque des revendications précédentes, dans laquelle la composition comprend entre 15 et 32 % en poids, de manière préférée entre 17 et 30 % en poids, de manière plus préférée entre 20 et 25 % en poids, de poudre de balle de riz.

5. Composition selon l'une quelconque des revendications précédentes, dans laquelle la surface de la poudre de balle de riz est fonctionnalisée grâce à des groupes silane ou siloxane.

6. Composition selon l'une quelconque des revendications précédentes, dans laquelle le rapport en poids de la résine PVC et de la poudre de balle de riz au sein de la composition est compris entre 1:1 et 3,5:1, de manière préférée compris entre 1,5:1 et 3:1, de manière plus préférée compris entre 2:1 et 2,5:1.

7. Composition selon l'une quelconque des revendications précédentes, comprenant en outre une ou plusieurs charge(s) minérale(s), de manière préférée choisie(s) dans le groupe comprenant le carbonate de calcium, le talc, le mica, l'argile, le kaolin, les silicates ou l'oxyde de titane, ou des mélanges de ceux-ci, de manière préférée entre 0 et 30 % par poids, de manière plus préférée entre 5 et 25 % en poids, de manière encore plus préférée entre 10 et 20 % en poids, par rapport à la quantité totale de la composition.

8. Composition selon l'une quelconque des revendications précédentes, comprenant en outre un ou plusieurs additif(s), de manière préférée choisi(s) dans le groupe comprenant les liants polymères, de manière préférée à base de matières thermoplastiques, les colorants et/ou les pigments, les lubrifiants, les auxiliaires de transformation du PVC tels que des plastifiants, des stabilisants UV, des stabilisants thermiques, des agents ignifuges, ou des mélanges de ceux-ci, de manière préférée entre 0 et 30 % en poids, de manière plus préférée entre 5 et 25 % en poids, de manière encore plus préférée entre 10 et 20 % en poids, par rapport à la quantité totale de la composition.

9. Composition selon l'une quelconque des revendications précédentes, comprenant entre 35 et 50 % en poids de résine PVC et entre 15 et 30 % en poids de poudre de balle de riz, ainsi que entre 10 et 25 % en poids de charges minérales et entre 10 et 25 % en poids d'additifs, par rapport à la quantité totale de la composition.

10. Composition selon l'une quelconque des revendications précédentes, dans laquelle la composition comprend exclusivement la résine PVC en tant que composant polymère.

11. Pièce moulée, pouvant être produite par moulage d'une composition selon l'une quelconque des revendications précédentes et par l'intermédiaire d'un procédé de moulage, comprenant de manière préférée des étapes d'expansion, de (co)extrusion, de calandrage, de moulage par injection ou d'impression 3D.

12. Pièce moulée selon la revendication 11, dans laquelle la pièce moulée présente la forme d'une plaque ou d'une feuille ou d'un profilé, dans laquelle la plaque ou la feuille ou le profilé présente de manière préférée une épaisseur inférieure ou égale à 3 mm, de manière préférée inférieure ou égale à 2 mm, de manière préférée inférieure ou égale à 1 mm.

13. Pièce moulée selon la revendication 11 ou 12, dans laquelle la pièce moulée est expansée et présente une densité inférieure à 1 g/cm³, de manière préférée inférieure à 0,7 g/cm³, de manière plus préférée inférieure à 0,5 g/cm³.

14. Pièce moulée selon les revendications 11 à 13, dans laquelle un traitement de surface a lieu après le moulage, de manière préférée un brossage, un ponçage, un meulage, un sablage, une peinture, un huilage, un glaçage, une impression ou des mélanges de ceux-ci.

15. Utilisation d'une pièce moulée selon l'une quelconque des revendications 11 à 14 en tant qu'imitation de bois, substrat expansé pour stratifiés, matériau de panneau, matériau de construction, matériau de sol, matériau de mur, matériau de plafond, pour des traverses, des placages, des châssis de fenêtre, des portes, des bardeaux, des parements, des façades, des clôtures, des meubles, des véhicules ou des boîtiers destinés à des équipements électriques.
